**Europäisches Patentamt**

**European Patent Office**

**Office européen des brevets**

(19)

(11) Veröffentlichungsnummer: **0 138 180**
**B1**

(12) **EUROPÄISCHE PATENTSCHRIFT**

(45) Veröffentlichungstag der Patentschrift:
**13.07.88**

(51) Int. Cl.⁴: **H 01 K 1/46**

(21) Anmeldenummer: **84112026.4**

(22) Anmeldetag: **08.10.84**

(54) **Leuchte mit einer Niedervolt-Halogenglühlampe.**

(30) Priorität: **10.10.83 DE 8329164 U**

(43) Veröffentlichungstag der Anmeldung:
**24.04.85 Patentblatt 85/17**

(45) Bekanntmachung des Hinweises auf die Patenterteilung:
**13.07.88 Patentblatt 88/28**

(84) Benannte Vertragsstaaten:
**CH DE FR GB IT LI**

(56) Entgegenhaltungen:
**CA - A - 1 018 501**
**DE - A - 2 804 586**
**FR - A - 2 510 824**

(73) Patentinhaber: **Patent-Treuhand-Gesellschaft für elektrische Glühlampen mbH, Hellabrunner Strasse 1, D-8000 München 90 (DE)**

(72) Erfinder: **Jendrewski, Alfons, Rudolf-Wilke-Weg 12, D-8000 München 71 (DE)**
Erfinder: **Roth, Otto, Bellinzonastrasse 22, D-8000 München 71 (DE)**

## Beschreibung

Die Erfindung betrifft eine Leuchte mit einem Gehäuse und einem daran angeordneten Anschlussteil zum Anschluss der Leuchte an das elektrische Stromnetz (120 V, 220 V). In dem Gehäuse ist eine NV-Halogenglühlampe mit Reflektor, eine Fassung für die Lampe und ein Transformator angeordnet.

Die CA-A-1 018 501 beschreibt eine NV-Leuchte, bei der ein Transformator konventioneller Bauart verwendet wird. Um die Bauhöhe derartiger Leuchten möglichst gering zu halten, ist es bekannt, Ringtransformatoren zu verwenden, bei denen der zylindrische Hohlraum dieses Transformatortyps dazu verwendet wird, entweder die Fassung für die entsprechende NV-Lampe aufzunehmen (s. DE-A1-32 27 382) oder die gesamte Reflektorlampe darin unterzubringen (s. DE-U-82 33 139).

Der Erfindung liegt die Aufgabe zugrunde, eine noch kompaktere Leuchte zum direkten Anschluss an das elektrische Stromnetz zu schaffen, die ausserdem vor Überhitzen geschützt ist.

Diese Aufgabe wird bei einer Leuchte mit den im Oberbegriff des Anspruchs 1 genannten Merkmale dadurch gelöst, dass zur Umsetzung der Netzspannung auf 12 V bzw. 6 V ein Flachkerntransformator verwendet wird. Durch die dadurch erzielte Miniaturisierung müssen Massnahmen getroffen werden, die den Wärmehaushalt der Leuchte regeln. Zu diesem Zweck ist der Transformator in einer Vergussmasse eingegossen, die eine ausreichende Ableitung der Wärme nach aussen gewährleistet. Zusätzlich ist in der Leuchte zwischen Transformator und Netzanschlussteil eine Temperatursicherung vorgesehen, die vorteilhafterweise in der Vergussmasse mit eingebettet ist. Die Vergussmasse hat neben der guten Wärmeableitung den Vorteil, den Transformator im Gehäuse zu befestigen und ihn vor Stoss zu schützen.

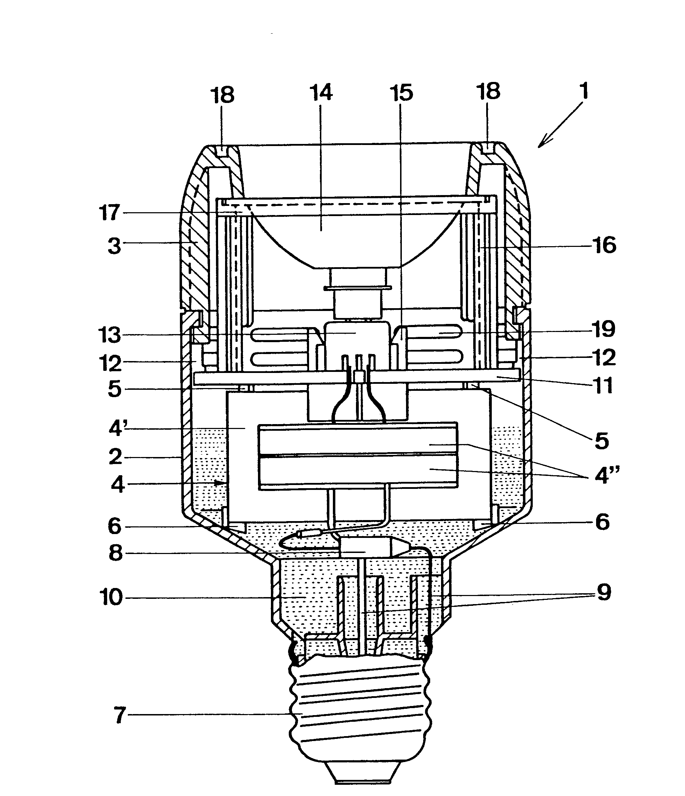

Die in den weiteren Ansprüchen genannten Einzelheiten der Leuchte werden anhand einer Zeichnung im folgenden näher beschrieben. Die Figur zeigt die erfindungsgemässe Leuchte in Seitenansicht, geschnitten.

Die in der Figur dargestellte Leuchte weist ein zweiteiliges Gehäuse 1 auf, das aus einem Unterteil 2 und einem Aufsatz 3 besteht. In dem Gehäuseunterteil 2 ist ein Flachkerntransformator 4, insbesondere ein flacher E-Kerntransformator, (Kern 4'; Windungen 4'') angeordnet, der von an der Gehäuseinnenwand angebrachten Stegen 5 und Vorsprüngen 6 geführt ist. Am unteren Ende des Unterteils 2 ist ein Normschraubsockel 7 vorgesehen, der es erlaubt, die Leuchte in eine Netzstromfassung einzusetzen. Anstelle eines Sockels ist jedoch auch ein Anschluss für Stromschienen o.ä. möglich. Zwischen Transformator 4 und Sockel 7 befindet sich eine Temperatursicherung 8, die zusammen mit dem Transformator 4 und den elektrischen Leitungen 9 in eine wärmeableitende Vergussmasse 10, insbesondere basierend auf Polyester und Polyurethan, eingebettet ist. Durch diese Masse 10 wird der Transformator 4 auch im Gehäuseunterteil 2 gehalten.

Nach oben ist der Transformator 4 bzw. das Gehäuseunterteil 2 von einer Platte 11 abgedeckt, die zwischen den Stegen 5 und Rasten 12 am Gehäuseunterteil 2 eingeklemmt ist. Die Platte 11 ist zur Halterung einer Fassung 13 für die NV-Halogenglühlampe 14 vorgesehen und weist dazu zwei in sich federnde Rastelemente 15 auf. Zwischen diesen ist die quaderförmige Fassung 13 aus Keramik mit Metallkontakten klemmend befestigt.

Des weiteren sind auf der Platte 11 Stege 16 angeformt, die einen Ring 17 tragen. Bei eingesetzter Lampe 14 liegt der die Strahlenaustrittsöffnung begrenzende Rand des Reflektors auf diesem Ring 17 auf. Durch den Aufsatz 3, der bajonettartig auf dem Gehäuseunterteil 2 befestigt ist, wird der Reflektor und damit auch die Lampe 14 in der Leuchte fixiert. Der Aufsatz 3 weist an seiner Stirnseite Belüftungsschlitze 18 auf, die mit den am Umfang des Unterteils 2 angeordneten weiteren Belüftungsschlitzen 19 (oberhalb der Platte 11) eine gute Abfuhr der von der Lampe 14 erzeugten Wärme ergeben.

## Patentansprüche

1. Leuchte mit einem Gehäuse und einem daran angeordneten Anschlussteil für das elektrische Stromnetz (120 V, 220 V), wobei im Gehäuse eine Niedervolt-Halogenglühlampe mit Reflektor, eine Fassung für die Lampe und ein Transformator angeordnet sind, dadurch gekennzeichnet, dass der Transformator (4) ein Flachkerntransformator ist, der in eine wärmeleitende Vergussmasse (10) eingegossen ist.

2. Leuchte nach Anspruch 1, dadurch gekennzeichnet, dass der Flachkerntransformator (4) durch die Vergussmasse in dem Gehäuse (1) befestigt ist.

3. Leuchte nach Anspruch 2, dadurch gekennzeichnet, dass die Vergussmasse (10) ein Giessharz ist.

4. Leuchte nach Anspruch 1, dadurch gekennzeichnet, dass zwischen Transformator (4) und Anschlussteil (7) eine Temperatursicherung (8) angeordnet ist.

5. Leuchte nach Anspruch 4, dadurch gekennzeichnet, dass die Temperatursicherung (8) ebenfalls in der Vergussmasse (10) mit eingegossen ist.

6. Leuchte nach Anspruch 1, dadurch gekennzeichnet, dass der Transformator (4) zur Lampe (14) hin von einer Platte (11) abgedeckt ist.

7. Leuchte nach Anspruch 1 und 6, dadurch gekennzeichnet, dass auf der Platte (11) in sich federnde Rastelemente (15) vorgesehen sind, mittels denen die Fassung (13) für die Niedervolt-Halogenglühlampe (14) befestigt ist.

8. Leuchte nach Anspruch 7, dadurch gekennzeichnet, dass die Fassung (13) aus Keramik mit Metallkontakten besteht.

9. Leuchte nach Anspruch 6, dadurch gekennzeichnet, dass auf der Platte (11) einen Ring (17) tragende Stege (16) angeformt sind.

10. Leuchte nach Anspruch 1, dadurch gekennzeichnet, dass das Gehäuse (1) der Leuchte aus einem Unterteil (2) und einem davon abnehmbaren Aufsatz (3) besteht.

## Claims

1. Light fitting comprising a housing and a connection part arranged thereat for the electrical mains system (120 V, 220 V), a low voltage halogen incandescent lamp with reflector, a holder for the lamp and a transformer being arranged in the housing, characterised in that the transformer (4) is a flat core transformer which is cast into a heat-conducting casting compound (10).

2. Light fitting according to Claim 1, characterised in that the flat core transformer (4) is mounted in the housing (1) by means of the casting compound.

3. Light fitting according to Claim 2, characterised in that the casting compound (10) is a casting resin.

4. Light fitting according to Claim 1, characterised in that a thermal fuse (8) is arranged between transformer (4) and connection part (7).

5. Light fitting according to Claim 4, characterised in that the thermal fuse (8) is also cast in the casting compound (10).

6. Light fitting according to Claim 1, characterised in that the transformer (4) is covered by a plate (11) in the direction of the lamp (14).

7. Light fitting according to Claim 1 and 6, characterised in that locking elements (15), which are elastic in themselves, are provided on the plate (11), by means of which locking elements the holder (13) for the low voltage halogen incandescent lamp (14) is mounted.

8. Light fitting according to Claim 7, characterised in that the holder (13) consists of ceramic with metal contacts.

9. Light fitting according to Claim 6, characterised in that ribs (16) carrying a ring (17) are formed on the plate (11).

10. Light fitting according to Claim 1, characterised in that the housing (1) of the light fitting consists of a base (2) and of a top section (3) which can be removed from the base.

## Revendications

1. Source lumineuse qui comporte un boîtier et, ménagée sur celui-ci, une pièce de raccordement destinée au réseau électrique (120 V, 220 V), une lampe à incandescence basse tension aux halogènes qui comporte un réflecteur, une douille destinée à la lampe et un transformateur, étant disposés dans le boîtier, caractérisée en ce que le transformateur (4) est un transformateur à noyau plat qui est scellé dans une masse de scellement (10) thermoconductrice.

2. Source lumineuse selon la revendication 1, caractérisée en ce que le transformateur à noyau plat (4) est fixé dans le boîtier (1) au moyen de la masse de scellement.

3. Source lumineuse selon la revendication 2, caractérisée en ce que la masse de scellement (10) est une résine coulable.

4. Source lumineuse selon la revendication 1, caractérisée en ce qu'un fusible thermique (8) est disposé entre le transformateur (4) et la pièce de raccordement (7).

5. Source lumineuse selon la revendication 4, caractérisée en ce que le fusible thermique (8) est également scellé dans la masse de scellement (10).

6. Source lumineuse selon la revendication 1, caractérisée en ce que le transformateur (4) est, du côté de la lampe (14), recouvert d'une plaque (11).

7. Source lumineuse selon la revendication 1 et 6, caractérisée en ce qu'est ménagé sur la plaque (11), un élément d'enclenchement élastique (15), au moyen duquel est fixée la douille (13), destinée à la lampe à incandescence basse tension aux halogènes (14).

8. Source lumineuse selon la revendication 7, caractérisée en ce que la douille (13) se compose de céramique avec des contacts métalliques.

9. Source lumineuse selon la revendication 6, caractérisée en ce que des barrettes (16), portant un anneau (17), sont conformées sur la plaque (11).

10. Source lumineuse selon la revendication 1, caractérisée en ce que le boîtier (1) de la source lumineuse se compose d'une partie inférieure (2) et d'un capot (3), amovible de ladite partie.